# EUROPÄISCHE PATENTSCHRIFT

(11) **EP 2 810 400 B1**
(45) Veröffentlichungstag und Bekanntmachung des Hinweises auf die Patenterteilung: **02.12.2015**
(21) Anmeldenummer: 13703986.3
(22) Anmeldetag: 28.01.2013
(51) Int. Cl.: H04L 9/06

(54) **KRYPTOGRAPHISCHES AUTHENTIFIZIERUNGS - UND IDENTIFIKATIONSVERFAHREN MIT REALZEITVERSCHLÜSSELUNG**
CRYPTOGRAPHIC AUTHENTICATION AND IDENTIFICATION METHOD USING REAL-TIME ENCRYPTION
PROCÉDÉ D'AUTHENTIFICATION ET D'IDENTIFICATION CRYPTOGRAPHIQUE À CHIFFREMENT EN TEMPS RÉEL

(30) Priorität: 31.01.2012 AT 1312012
(43) Veröffentlichungstag der Anmeldung: 10.12.2014
(73) Patentinhaber: Finalogic Business Technologies GmbH, 1010 Wien (AT)
(72) Erfinder: BEIDL, Heinrich, A-1030 Wien (AT); HRDY, Erwin, A-2232 Deutsch-Wagram (AT); SCHAUERHUBER, Julius, A-3462 Absdorf (AT)
(74) Vertreter: Fox, Tobias
(86) Internationale Anmeldenummer: PCT/AT2013/000013
(87) Internationale Veröffentlichungsnummer: WO 2013/113050

(56) Entgegenhaltungen:
- WO-A2-02/47356
- GB-A- 2 457 367
- US-A1- 2004 168 055
- DI NATALE G ET AL: "A Reliable Architecture for the Advanced Encryption Standard", PROCEEDINGS 13TH IEEE EUROPEAN TEST SYMPOSIUM - ETS 2008 - 25-29 MAY 2008, VERBANIA, ITALY, IEEE, NEW YORK, NY, US, 25. Mai 2008 (2008-05-25), Seiten 13-18, XP031281076, ISBN: 978-0-7695-3150-2

## Beschreibung

Die Erfindung betrifft ein Verfahren zur Sicherung von Daten und Sicherstellung ihres Ursprunges, wobei die Daten von einem Kundengerät an eine Zentrale elektronisch verschlüsselt übermittelt werden und wobei das Verfahren die folgenden Schritte umfaßt:
i) Erzeugen und Speichern eines RSA-Schlüsselpaares bestehend aus einem ersten Schlüssel (Sa) und einem zweiten Schlüssel (Pa) für das Signieren von Kundenzertifikaten in der Zentrale,
ii) Generieren und Speichern zweier RSA-Schlüsselpaare für das Kundengerät bestehend aus einem dritten Schlüssel des Kundengerätes (Sc) und einem vierten Schlüssel des Kundengerätes (Pc) sowie einem ersten Schlüsselverschlüsselungsschlüssel (St) und einem zweiten Schlüsselverschlüsselungsschlüssel (Pt), wobei der erste Schlüsselverschlüsselungsschlüssel (St) und der zweite Schlüsselverschlüsselungsschlüssel (Pt) zum gesicherten Transport des dritten Schlüssels des Kundengerätes (Sc) geeignet sind,
iii) Erzeugen eines verschlüsselten Schlüssels durch Verschlüsseln des dritten Schlüssels des Kundengerätes (Sc) mit dem zweiten Schlüsselverschlüsselungsschlüssel (Pt) sowie Generieren eines Kundenzertifikats in der Zentrale durch Verschlüsseln der kundenspezifischen Telefonnummer sowie der IMEI des Kundengerätes und/oder einer Kundennummer mit dem vierten Schlüssel des Kundengerätes (Pc) und anschließendem Verschlüsseln mit dem ersten Schlüssel (Sa) für das Signieren von Kundenzertifikaten,
iv) Übermitteln des verschlüsselten Schlüssels und des Kundenzertifikats an das Kundengerät,
v) Senden des ersten Schlüsselverschlüsselungsschlüssels (St) an das Kundengerät nach einer Anforderung durch das Kundengerät,
vi) Entschlüsseln des verschlüsselten Schlüssels mit dem ersten Schlüsselverschlüsselungsschlüssel (St) in dem Kundengerät, wobei der dritte Schlüssel des Kundengerätes (Sc) erhalten wird.

Im Stand der Technik sind Verfahren zur sicheren Übermittlung elektronischer Daten mit Hilfe von digitalen Verschlüsselungstechniken bekannt.

Die US 2002 059 146 A1 zeigt ein Verfahren zur Identifizierung eines Anwenders und zur sicheren Übermittlung von Zahlencodes. Dabei wird ein Transactionscode durch Verschlüsselung einer zufälligen Zahl mit der PIN des Anwenders, welche nur dem Anwender und einer Zentrale bekannt ist, verwendet. Nachteilig ist hier, daß bereits das Ausspähen der PIN die Sicherheit dieses Verfahrens gefährdet.

Die AT 504 634 B1 sowie die WO 2008 151 209 A1, auch veröffentlicht als US 2008 298 588 A1, offenbaren Verfahren zum Transferieren von verschlüsselten Nachrichten. Dabei wird unter wechselnder Verwendung von symmetrischen und asymmetrischen Schlüsseln, wie etwa RSA-Schlüsselpaaren, eine Nachricht über einen dritten Kommunikationspunkt, die sogenannte Authentifikationseinrichtung, gesendet, die erst bei erfolgreicher gegenseitiger Identifizierung des Senders und Empfängers sowie entsprechender Übermittlung von Schlüsseln untereinander die Nachrichtenübertragung freigibt. Nachteil dieser Lehre ist, daß permanent ein dritter Kommunikationspunkt, beispielsweise in Form eines Servers, betrieben werden muß.

Die WO 2008 076 442 A1 lehrt ein Verfahren zur Verreihung der Nummern auf einem Nummernfeld, auf welchem beispielsweise eine PIN eingegeben wird. Das mechanische Nummernfeld bleibt unverändert, jedoch ignoriert der Anwender bei der Eingabe die (standardisierte) Ziffernbeschriftung der Tasten. Ihm wird über eine Bildschirmanzeige eine neue Verteilung der Ziffern 0 bis 9 vorgegeben, wonach er seine PIN in das Nummernfeld eingibt. Dadurch ist das Ausspähen der PIN durch Dritte erschwert. Nachteilig ist, daß diese Sicherheitsmaßnahme wirkungslos ist, wenn ausspähende Dritte auch den Algorithmus zur Verreihung der Nummern kennen.

Die US 2003 182 558 A1 zeigt ebenfalls ein Verfahren zur Verreihung von Ziffern eines Nummernfeldes, wobei die Ziffern zusätzlich in einer anderen Geometrie als der herkömmlichen Tastaturanordnung auf einem berührungsempfindlichen Bildschirm dargestellt werden. Der Nachteil des wirkungslosen Schutzes bei Kenntnis des Darstellungsalgorithmus bleibt jedoch.

Die US 2004/0168055 A1 lehrt ein sicheres Messaging-System, bei welchem mittels unter Verwendung eines RSA-Schlüsselpaares ein Schlüssel in verschlüsselter Form an ein Kundengerät übermittelt wird, um die Sicherheit der Übermittlung zu erhöhen. Auch für ein Zertifikat wird dieses Verfahren verwendet. Nachteilig ist hier, daß die Sicherheit nur um einen geringen Grad erhöht ist. Der Aufwand für die Entschlüsselung einer Information ist lediglich zweimal aufzubringen.

Es ist die Aufgabe des erfindungsgemäßen Verfahrens, die Nachteile im Stand der Technik zu überwinden und ein Verfahren anzugeben, bei welchem es nicht möglich ist, durch Ausspähen einer Nummerneingabe oder Kenntnis eines oder mehrerer Schlüssel bei der Übermittlung von Daten die Identität des Absenders und den Inhalt der Daten zu verändern.

Laut dem Prinzip von Kerkhoff von 1883 ist ein Kryptosystem sicher, trotzdessen ein Angreifer alle Systemdetails kennt, solange die Schlüssel geheim bleiben (Kerkhoff's Principle [1883]: A cryptosystem should be secure even if the attacker knows all the details about the system, with the exception of the secret key).

Die Aufgaben werden erfindungsgemäß dadurch erreicht, daß das Verfahren die folgenden weiteren Schritte umfaßt:
vii) Verschlüsseln einer verreihten Ziffernanordnung in der Zentrale mit dem vierten Schlüssel des Kundengerätes (Pc),
viii) Senden der verschlüsselten verreihten Ziffernanordnung an das Kundengerät,
ix) Entschlüsseln der verschlüsselten verreihten Ziffernanordnung im Kundengerät mit dem dritten Schlüssel des Kundengerätes (Sc),
x) Verschlüsseln einer ersten PIN-Eingabe am Kundengerät mit dem dritten Schlüssel des Kundengerätes (Sc) zu einem Chiffrat,
xi) Senden des Chiffrats und des Kundenzertifikats an die Zentrale,
xii) Entschlüsseln des Chiffrats in der Zentrale mit dem vierten Schlüssel des Kundengerätes (Pc), Entschlüsseln der ersten PIN-Eingabe und Überprüfen des zugesendeten Kundenzertifikats mit dem in der Zentrale gespeicherten Kundenzertifikat.

Bevorzugt ist in einer Ausgestaltung der Erfindung, daß das Chiffrat in der Zentrale entschlüsselt und daß das vom Kundengerät übermittelte Zertifikat mit dem in der Zentrale gespeicherten Zertifikat verglichen wird, um die Authentizität der Daten zu verifizieren.

Weiterhin bevorzugt wird in Ausgestaltung des erfindungsgemäßen Verfahrens, daß die Verreihung der verreihten Ziffernanordnung bei der Initialisierung des Verfahrens einmalig vom Kunden gewählt und an die Zentrale übermittelt wird.

Bevorzugt ist in einer Ausgestaltung der Erfindung, daß die Verreihung der verreihten Ziffernanordnung in der Zentrale für jede Übermittlung an das Kundengerät neu generiert wird.

Weiterhin bevorzugt wird in Ausgestaltung des erfindungsgemäßen Verfahrens, daß das Verfahren die weiteren Schritte umfaßt:
iii.a) Generieren eines Zeitstempels in der Zentrale,
iv.a) Übermitteln des verschlüsselten Schlüssels zusammen mit dem Zeitstempel an das Kundengerät,
x.a) Verschlüsseln der ersten PIN-Eingabe am Kundengerät zusammen mit dem Zeitschlüssel zu einem Chiffrat.

Eine bevorzugte Ausführungsform des Verfahrens zeichnet sich durch die weiteren Schritte aus:
x.b) Verschlüsseln einer zweiten PIN-Eingabe am Kundengerät mit dem dritten Schlüssel des Kundengerätes (Sc) zu einem Chiffrat, um eine neue PIN zur Zentrale zu schikken, und
x.c) Verschlüsseln einer dritten PIN-Eingabe am Kundengerät mit dem dritten Schlüssel des Kundengerätes (Sc) zu einem Chiffrat, um die neue PIN zu bestätigen.

Bevorzugt ist in einer Ausgestaltung der Erfindung, daß zusätzlich zur ersten PIN-Eingabe die Nummerneingabe einer Kreditkartennummer und/oder ein Ablaufdatum einer Kreditkarte und/oder eine Prüfziffer einer Kreditkarte erfolgt und zusammen mit der ersten PIN-Eingabe verschlüsselt an die Zentrale übermittelt wird.

Weiterhin bevorzugt wird in Ausgestaltung des erfindungsgemäßen Verfahrens, daß zusätzlich zur ersten PIN-Eingabe die Nummerneingabe einer warenspezifischen Zahl, wie z.B. die ISBN eines Buchtitels, erfolgt und zusammen mit der ersten PIN-Eingabe verschlüsselt an die Zentrale übermittelt wird.

Die Erfindung wird nachstehend anhand eines in den Zeichnungen dargestellten Ausführungsbeispiels näher erläutert. Es zeigen: Fig. 1 eine schematische Darstellung der Übermittlung vorbereitender Daten an ein Kundengerät, Fig. 2 ein schematisches Kundengerät, und die Fig. 3a bis 3d verschieden verreihte Ziffernanordnungen auf einem Nummernfeld.

Das Verfahren, das auch als Finalogic-System bezeichnet wird, wird von Inhabern von beispielsweise mobilen Telefon- und Kommunikationsgeräten benutzt, um auf gesicherten Prozessen Rechtsgeschäfte ausführen zu können. Das sind etwa die Bestellung von Waren oder Dienstleistungen sowie der Zugriff auf geschützte Informationen.

Dies betrifft folglich den Schutz von numerischen und/oder auch alphanumerischen Dateneingaben an mobilen Telefon- und Kommunikationsgeräte vor Kenntnisnahme unberechtigter Dritter. Solche Dateneingaben können sein und werden in dem Verfahren angewendet bei der
- Festlegung, Eingabe und Änderung der PIN des Mobiltelefonhalters und der
- Eingabe von Kreditkartendaten des Mobiltelefon- bzw. Kommunikationsgerätehalters.

Dies betrifft ebenso Verfahrensschritte für die Überprüfung der Echtheit des Ursprungs und Inhalt von funktechnisch übermittelten Daten von mobilen Telefon- und Kommunikationsgeräten, die Identität des Absenders und die Verhinderung der freien Lesbarkeit sensitiver Informationen durch unberechtigte Dritte unter Verwendung kryptographischer Methoden in Realzeitverschlüsselung zur Aktionsperiode.

Zur Nutzung des erfindungsgemäßen Verfahrens muß sich der Kunde, das ist ein Inhaber eines mobilen Telefon- und Kommunikationsgerätes, im folgenden auch Kundengerät, entweder telefonisch oder via einer Internetseite, wie etwa Finalogics Webseite, registrieren lassen.

Dabei wird er - neben den erforderlichen persönlichen Daten - auch um die Type seines Gerätes gefragt, beispielsweise iPhone4. Des weiteren kann es Wunsch des Kunden sein, schon zu diesem Zeitpunkt zum Beispiel die Art seiner Bezahlweise, beispielsweise Kreditkarte oder die Berechtigungspaßwörter für den Zugang zu bestimmten Informationsservices, anzugeben. Wichtig ist, daß die eigentlichen Zugangsdaten, welche besonders sensitiven Informationscharakter haben, erst zu einem späteren Zeitpunkt im System bekanntgegeben werden müssen.

Abschließend wird der Kunde noch um zwei Datenelemente seines Geräts gefragt:
i. die eigene Telefonnummer (Phone#) und
ii. die 15-stellige IMEI - International Mobile Equipment Identifier, Hardwareidentifikationsnummer - sie ist weltweit einmalig für jedes mobile Telefon- oder Kommunikationsgerät. Diese Nummer kann jeder Kunde selbst durch die Tastenkombiriation *#06# aus seinem Gerät auslesen.

Alternativ oder zusätzlich zur IMEI, die nicht sehr gut zu schützen und in manchen Fällen auch mehrfach an viele Geräte vergeben wird, kann zwischen Kunde und Zentrale eine Kundennummer vereinbart werden. Im folgenden wird dann die Verwendung dieser Kundennummer anstatt oder zusammen mit der IMEI die Sicherheit des erfindungsgemäßen Verfahrens zusätzlich steigern.

Nach Eingabe dieser Informationen in das Finalogic-System ist der Registrierungsprozess beendet.

Nun beginnt der Kryptographische Initialisierungsprozeß zur Sicherstellung der Echtheit des Ursprunges und zur Echtheit von elektronisch übermittelten Daten oder auch das Verfahren zur Sicherung von Daten und Sicherstellung ihres Ursprungs. Dabei arbeitet das Finalogic-System mit Datenelementen der PKI - Public Key Infrastructure, gemäß dem internationalen Standard IEEE P1363.

Es werden asymmetrische Schlüsselpaare verwendet, die aus einem geheimen Teil (privater Schlüssel) und einem nicht geheimen Teil (öffentlicher Schlüssel) bestehen. Der öffentliche Schlüssel ermöglicht es jedem, Daten für den Inhaber des privaten Schlüssels zu verschlüsseln, dessen digitale Signaturen zu prüfen oder ihn zu authentifizieren. Authentifikation ist dabei die Identifikation der eigenen Person. Der private Schlüssel ermöglicht es seinem Inhaber, mit dem öffentlichen Schlüssel verschlüsselte Daten zu entschlüsseln, digitale Signaturen zu erzeugen oder sich zu authentisieren.

Folgende asymmetrische Schlüsselpaare finden Verwendung:
i. ein erster Schlüssel für das Signieren von Kundenzertifikaten Sa, der sogenannte geheime PrivateKey(Finalogic);
ii. ein zweiter Schlüssel Pa für das Signieren von Kundenzertifikaten, der sogenannte öffentliche PublicKey(Finalogic);
iii. ein erster Schlüsselverschlüsselungsschlüssel St, der sogenannte geheime PrivateKey(Trans);
iv. ein zweiter Schlüsselverschlüsselungsschlüssel, der sogenannte öffentliche PublicKey(Trans);
v. ein dritter Schlüssel des Kundengerätes Sc, der sogenannte geheime PrivateKey(Cust) des Kunden, auch Verschlüsselungsschlüssel genannt;
vi. ein vierter Schlüssel des Kundengerätes Pc, der sogenannte öffentliche PublicKey(Cust) des Kunden, auch Entschlüsselungsschlüssel genannt;
vii. und die Datenelemente, welche das Kundengerät kennzeichnen:
   a. eigene Telefonnummer (Phone#) und
   b. IMEI (Hardwareidentifikationsnummer) und/oder die Kundennummer.

Das Verfahren läuft wie folgt ab:
i. In der Zentrale (oder auch Datenverarbeitungszentrale) wird genau ein RSA-Schlüsselpaar - Sa und Pa - erzeugt und gespeichert.

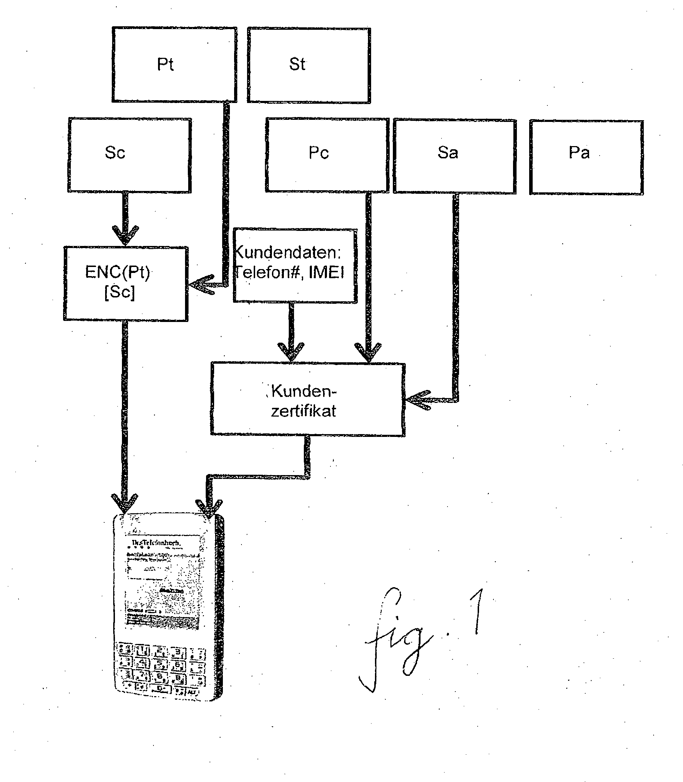

Jedoch werden für jedes Kundengerät zwei RSA-Schlüsselpaare neu generiert und gespeichert: Sc und Pc sowie St und Pt. Das Transportschlüsselpaar St-Pt wird zum gesicherten Transport des geheimen Kundenschlüssel Sc zum Kundengerät benötigt. Die Zentrale generiert auch für jeden Kunden das sogenannte Kundenzertifikat oder kurz Zertifikat. Die dafür notwendige Berechnungsvorschrift lautet: (1) verschlüssle eigene Phone#, IMEI (Hardwareidentifikationsnummer) und/oder die Kundennummer mit dem öffentlichen Kundenschlüssel Pc: ENC(Pc)(Phone#, IMEI, KuNu), (2) verschlüssle das Ergebnis aus (1) mit dem geheimen Schlüssel von Finalogic Sa: ENC(Sa)(ENC(Pc)(Phone#, IMEI (Hardwareidentifikationsnummer), KuNu)). Ein RSA-Schlüsselpaar ist ein Schlüsselpaar, das aus einem privaten Schlüssel, der zum Entschlüsseln oder Signieren von Daten verwendet wird, und einem öffentlichen Schlüssel, mit dem man verschlüsselt oder Signaturen prüft, besteht. Der private Schlüssel wird geheimgehalten und kann nur mit extrem hohem Aufwand aus dem öffentlichen Schlüssel berechnet werden. Ergebnis ist das Zertifikat "CustPK Certificate" für diesen Kunden. Im allgemeinen ist ein Zertifikat ein digitaler Datensatz, der bestimmte Eigenschaften von Personen oder Objekten bestätigt sowie dessen Authentizität und Integrität durch kryptographische Verfahren geprüft werden können. Das digitale Zertifikat enthält insbesondere die zu seiner Prüfung erforderlichen Daten. Fig. 1 zeigt diese Schritte und die Übermittlung an das Kundengerät, das als Mobiltelefon dargestellt ist. Gemeinsam mit einem für die Telefon- bzw. Kommunikationsgerätetype des Kunden geeigneten Programm (Application, kurz APP, oder auch telefonanbieterunabhängige Programm-Applikation auf Mobiltelefon oder Kommunikationsgerät) oder eines gleichwertigen Programmes, welches unter dem Gerätebetriebssystem laufen kann, werden die kryptographischen Elemente
- verschlüsselter geheimer Kundenschlüssel ENC(Pt)[Private Key(Cust) Sc] und
- Kundenzertifikat CustPK Certificate
zum Kundengerät funk- oder leitungstechnisch übermittelt.

Die Entgegennahme und Speicherung obiger Programme und Dateien auf der Festplatte des Kundengeräts bedarf der Zustimmung des Kunden.

Mit diesem Programm und diesen Informationen sind nun folgende Operationen durch den Kunden möglich:

### Personalisierung:

Dieses Verfahren zur Authentifizierung ist nicht nur in der Lage, den zweifelsfreien Beweis zu liefern, daß zum Beispiel eine bestimmte Kauforder vom Kundengerät mit der einzigartigen Kundennummer oder der IMEI (Hardwareidentifikationsnummer) abgegeben wurden, sondern kann auch den Inhaber eineindeutig identifizieren.

Dazu wählt sich der Kunde seine persönliche PIN (Persönliche Identifikationsnummer) numerisch/alphanumerisch, wie international üblich zwischen 4 bis 12 Ziffern lang, für welche der Kunde selbst verantwortlich ist. Nur mit dieser PIN kann der Kunde alle Funktionen seiner APP nutzen.

Jedoch ist der Kunde bei der PIN-Eingabe auf mobilen Telefonund Kommunikationsgeräten den betrügerischen Versuchen unlauterer Dritter zur Aufdeckung seiner PIN gefährdet. Hier besteht natürlich kein Unterschied zu anderen Systemen, die mit ähnlichen Schutzmechanismen zum Schutz der persönlichen Befugnisse ausgestattet sind. Daher gelten hierbei auch die gleichen Aufbewahrungsregeln von Paßwörtern.

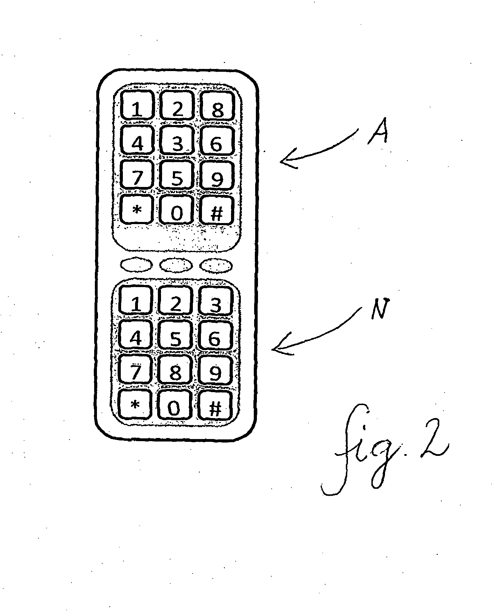

Aus diesem Grund erfolgt die PIN- oder andere Zahleneingaben in dem erfindungsgemäßen Verfahren unter Verwendung der sogenannten verreihten PIN, wie in Fig. 2 dargestellt.

Auf der Bildschirmanzeige A des Kundengeräts wird dem Kunden - anstatt der üblichen Reichenfolge bzw. Anordnung der Ziffern 1 bis 9 und 0 - eine zufällige Anordnung dieser Ziffern gezeigt, gemäß dieser der Kunde auf der Gerätetastatur N seine PIN eingeben muß.

### Beispiel 1 für numerische Tastaturen:

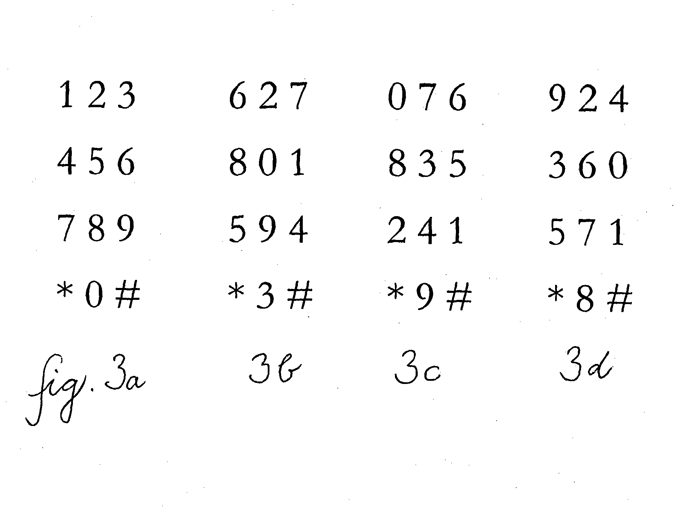

Die übliche Ziffernreihung lauten: 1234567890. Deren Anordnung sieht so aus wie in Fig. 3a dargestellt. Die verreihte Ziffernanordnung für diese PIN-Eingabe lautet gemäß Fig. 3b 6278015943. Für die verreihte Eingabe der PIN '7510' drückt der Kunde nun die Tastenfolge '3765'.

### Beispiel 2 für numerische Tastaturen:

Hier ist noch ein Beispiel, um die Arbeitsweise der Methode der verreihten PIN zu demonstrieren. Die verreihte Ziffernanordnung für diese PIN-Eingabe lautet: 0768352419, wie in Fig. 3c gezeigt. Für die verreihte Eingabe der PIN '415597' drückt der Kunde nun '896602'.

Die zufällige Ziffernanforderungsvorschrift wechselt mit jeder PIN- oder anderen numerischen Dateneingabe (beispielsweise der Kreditkartennummer), nicht schon nach jeder Ziffer.

Das Verfahren der Personalisierung zur Sicherstellung der Echtheit der Identität des Absenders und Nutzers des Systems läuft wie folgt ab:
i. Unmittelbar nach Öffnung der APP wird von der Zentrale der geheime Schlüsselentschlüsselungsschlüssel St angefordert, um den eigentlichen Verschlüsselungsschlüssel Sc des Kunden zu erhalten.
ii. Anschließend generiert das Datenverarbeitungszentrum eine neue, beliebige Ziffernanordnung, beispielsweise '9243605718', wie in Fig. 3d dargestellt, und verschlüsselt sie mit dem öffentlichen Kundenschlüssel Pc gemäß ENC(Pc)(CustData,'9243605718'), und wird nun zum Kunden gesandt.
iii. Die APP entschlüsselt das erhaltene Chiffrat mit dem geheimen Kundenschlüssel Sc DEC(Sc)(ENC(Pc)(CustData, '9243605718')).
   Am Bildschirm erscheint die neue Anordnungsvorschrift gemäß (ii) für die numerischen Tastaturbelegung, wie sie in Fig. 3d zu sehen ist.
iv. Der Kunde führt seine PIN-Eingabe gemäß der angezeigten Anordnungsvorschrift durch, das Ergebnis wird mit dem Verschlüsselungsschlüssel des Kunden Sc verschlüsselt. Auch das Zertifikat wird verschlüsselt: ENC(Sc)(CustPK Certificate, '397718'). Dies wird zur Zentrale gesendet.
v. In der Zentrale wird das Chiffrat geeignet entschlüsselt, und die PIN '415597' wird in den Stammdaten des Kunden gespeichert, sofern auch die Verifikation des Kundenzertifikats CustPK Certifiate erfolgreich war. Die Verifikation des Kundenzertifikats garantiert die Authentizität der übermittelten Daten und die Identität des Ursprungs.

Die PIN-Änderungsfunktion läuft wie folgt ab, denn ab nun kann der Kunde jederzeit auch die 'PIN-Änderungsfunktion' anwählen:
i. Eingabe der alten PIN
ii. Eingabe der neuen PIN
iii. Wiederholung der neuen PIN

Wesentlicher Vorteil dieser Methode ist, daß, weil Finalogic-System die Ziffernanordnungsvorschrift bei jeder Eingabe ändert, sich die Chiffrate der Schritte ii) und iii) wertemäßig unterscheiden - obwohl die Originalwerte ident sind. Deswegen ist diese PIN-Änderungsfunktion sicherheitstechnisch den herkömmlichen Passwort-Änderungsfunktionen überlegen, da bei Finalogic-System eine sogenannte Datenwiedereinspielungsattacke erfolgreich erkannt und abgewehrt wird.

In der Praxis hat sich herausgestellt, daß sich Kunden die PIN nicht als Zahlenfolge merken, sondern als graphische Figur, die der tippende Finger auf dem Ziffernblock ausführt. Daher kann eine ständig wechselnde Verreihung der Ziffern als unbequem empfunden werden und zu Eingabefehlern führen. Um dies zu vermeiden, kann der Kunde alternativ eine konkrete Verreihung der Ziffern wählen, die seinem Gerät vom Trust Server nutzerspezifisch zugewiesen und übermittelt wird. Die Verreihung der Ziffern wechselt also nicht nach jeder einzelnen Anwendung, sondern bleibt für den individuellen Kunden gleich. Dabei tritt der überraschende Effekt ein, daß die PIN-Eingabe weiterhin vor der Ausspähung Dritter weitgehend gesichert ist, aber gleichzeitig sich der Kunde eine graphische Figur, die sein tippender Finger beim Eingeben ausführt, merken kann und darf. Selbstverständlich kann der Nutzer jederzeit im Web-Registrierungsprozeß eine neue Verreihung vom Trust Server erstellen lassen oder zum System mit ständig wechselnder Verreihung der Ziffern wechseln, wenn ihm das aus Sicherheitsgründen geboten erscheint.

Die Transaktion für Rechtsgeschäfte läuft folgendermaßen ab:

### 1. Ablauf einer Einkaufstransaktion (Beispiel):

i. Unmittelbar nach Öffnung der APP wird von der Zentrale der geheime Schlüsselentschlüsselungsschlüssel St angefordert, um den eigentlichen Verschlüsselungsschlüssel Sc des Kunden zu erhalten.
ii. In der Datenverarbeitungszentrale wird ein Zeitstempel genommen, dieser wir mit dem öffentlichen Kundenschlüssel Pc verschlüsselt und zum Kunden gesandt, ENC(Pc)(CustData,'2010-07-01/10:09:11,571').
iii. Die APP entschlüsselt das erhaltene Chiffrat mit dem geheimen Kundenschlüssel Sc DEC(Sc)(ENC(Pc)(CustData, '2010-07-01/10:09:11,571')).

Wird beispielsweise das Buch "Die Sieben Weltwunder" vom Kunden gewünscht, wird dessen ISBN Code zusammen mit dem Kundenzertifikat und dem Zeitstempel mit dem geheimen Kundenschlüssel Sc verschlüsselt, ENC(Sc)(CustPK Certificate, '2010-07-01/ 10:09:11,571','ISBN 3-8094-1694-0'), und zur Datenverarbeitungszentrale gesandt.

In der Datenverarbeitungszentrale wird das Chiffrat geeignet entschlüsselt, das Kundenzertifikat geprüft und, falls auch der Zeitstempel noch nicht zulange verstrichen ist, der Kaufauftrag des Kunden zum entsprechenden Händler weitergeleitet.

### 2. Ablauf einer Kreditkartenzahlung (Beispiel):

Wählt der Kunde als Option die Bezahlweise mittels Kreditkarten, kommt wieder unser gesichertes Verfahren mittels verreihter Ziffernanforderung zur Anwendung.
Die einzelnen Transaktionsschritte im Detail sind:
i. Unmittelbar nach Öffnung der APP wird von der Zentrale der geheime Schlüsselverschlüsselungsschlüssel St angefordert, um den eigentlichen Verschlüsselungsschlüssel Sc des Kunden zu erhalten.
ii. Die Zentrale generiert eine neue Ziffernanordnung, beispielsweise '9243605718', und verschlüsselt sie mit dem öffentlichen Kundenschlüssel Pc ENC(Pc)(CustData, '9243605718'), und wird zum Kunden gesandt.
iii. Die APP entschlüsselt das erhaltene Chiffrat mit dem geheimen Kundenschlüssel Sc gemäß DEC(Sc)(ENC(Pc)(CustData, '9243605718')).
   Am Bildschirm erscheint die Anordnungsvorschrift, wie in Fig. 3d angegeben.
iv. Eingabe der Kartennummer, des Ablaufdatums und gegebenenfalls eines Prüfwertes gemäß der angezeigten Verreihungsvorschrift, das Ergebnis wird mit dem Verschlüsselungsschlüssel des Kunden Sc verschlüsselt, ENC(Sc)(CustPK Certificate, '7255236666666669', '92/94', '999'), und zur Zentrale gesandt.
v. In der Zentrale wird das Chiffrat geeignet entschlüsselt und das Kundenzertifikat geprüft und, falls positiv, wird eine entsprechende Kreditkartenzahlung initiiert.

Der Datenschutz ist ebenso gesichert, denn im System, das das erfindungsgemäße Verfahren verwendet, kommen sogenannte HSMs (Host Security Modules) zur Datenver- und Datenentschlüsselung und für die Schlüsselverwaltungsoperationen zum Einsatz.

Solche Geräte beinhalten für kryptographische Zwecke optimierte und vor jedem Angriff oder Zugriff von außen geschützte Rechen- und Speicherwerke. Ihr Schutzsystem geht soweit, daß sie keinesfalls Werte oder Instruktionen in unverschlüsselter Form nach außen lassen und alle Schlüsselwerte löschen, sobald jedweder Auslese- oder Datenabtastungsversuch erkannt wird. Auch die versuchte Entfernung einzelner Teile, ja sogar die unauthorisierte Öffnung des Gehäuses führt zum gesamten Speicherverlust - konkret wird dabei jedes Bit des Schlüsselspeichers mit '0' überschrieben.

Zum Schutz der persönlichen Daten unserer Kunden benutzt Finalogic im Datenverkehr mit den Händlern entweder
- eigene Leitungsverschlüsselungsschlüssel, falls die Gegenseite auch HSM-Module unterhält, oder
- zumindest SSL-Verschlüsselung zu den Datenempfangsgeräten der Händler, welche SSL verstehen müssen.

Die SSL-Verschlüsselung (Secure Socket Layer) wurde von den Firmen Netscape und RSA Data Security entwickelt. Das SSL-Protokoll soll gewährleisten, daß sensible Daten beim Surfen im Internet, beispielsweise Kreditkarten-Informationen beim Online Shopping, verschlüsselt übertragen werden. Somit soll verhindert werden, daß Dritt-Nutzer die Daten bei der Übertragung nicht auslesen oder manipulieren können. Zudem stellt dieses Verschlüsselungsverfahren die Identität einer Website sicher.

In den angesprochen Verschlüsselungsgeräten, etwa von Finalogic, findet eine Umschlüsselungsoperation unter Benutzung des Entschlüsselungsschlüssels des Kunden Pc und des Verschlüsselungsschlüssel des Händlers statt.

Sicherheitsanforderungskonforme HSMs müssen alle Sicherheitsanforderungen gemäß der internationalen Norm FIPS 140-2 Level 4 erfüllen. FIPS heißt Federal Information Processing Standard und ist die Bezeichnung für öffentlich bekanntgegebende Standars der Vereinigten Staaten. FIPS 140 impliziert, daß Datenmaterial im Klartext unter keinen Umständen ausgelesen oder sonst wie exportiert werden können.

Diese Vorgehensweise garantiert unseren Kunden vollkommenen Schutz ihrer persönlichen Daten während der Datenverarbeitung durch Finalogic.

## Patentansprüche

1. Verfahren zur Sicherung von Daten und Sicherstellung ihres Ursprungs, wobei die Daten von einem Kundengerät an eine Zentrale elektronisch verschlüsselt übermittelt werden, und wobei das Verfahren die folgenden Schritte umfaßt:
i) Erzeugen und Speichern eines RSA-Schlüsselpaares bestehend aus einem ersten Schlüssel (Sa) und einem zweiten Schlüssel (Pa) für das Signieren von Kundenzertifikaten in der Zentrale,
ii) Generieren und Speichern zweier RSA-Schlüsselpaare für das Kundengerät bestehend aus einem dritten Schlüssel des Kundengerätes (Sc) und einem vierten Schlüssel des Kundengerätes (Pc) sowie einem ersten Schlüsselverschlüsselungsschlüssel (St) und einem zweiten Schlüsselverschlüsselungsschlüssel (Pt), wobei der erste Schlüsselverschlüsselungsschlüssel (St) und der zweite Schlüsselverschlüsselungsschlüssel (Pt) zum gesicherten Transport des dritten Schlüssels des Kundengerätes (Sc) geeignet sind,
iii) Erzeugen eines verschlüsselten Schlüssels durch Verschlüsseln des dritten Schlüssels des Kundengerätes (Sc) mit dem zweiten Schlüsselverschlüsselungsschlüssel (Pt) sowie Generieren eines Kundenzertifikats in der Zentrale durch Verschlüsseln der kundenspezifischen Telefonnummer sowie der IMEI des Kundengerätes und/oder einer Kundennummer mit dem vierten Schlüssel des Kundengerätes (Pc) und anschließendem Verschlüsseln mit dem ersten Schlüssel (Sa) für das Signieren von Kundenzertifikaten,
iv) Übermitteln des verschlüsselten Schlüssels und des Kundenzertifikats an das Kundengerät,
v) Senden des ersten Schlüsselverschlüsselungsschlüssels (St) an das Kundengerät nach einer Anforderung durch das Kundengerät,
vi) Entschlüsseln des verschlüsselten Schlüssels mit dem ersten Schlüsselverschlüsselungsschlüssel (St) in dem Kundengerät, wobei der dritte Schlüssel des Kundengerätes (Sc) erhalten wird,
**gekennzeichnet durch** die weiteren Schritte:
vii) Verschlüsseln einer verreihten Ziffernanordnung in der Zentrale mit dem vierten Schlüssel des Kundengerätes (Pc),
viii) Senden der verschlüsselten verreihten Ziffernanordnung an das Kundengerät,
ix) Entschlüsseln der verschlüsselten verreihten Ziffernanordnung im Kundengerät mit dem dritten Schlüssel des Kundengerätes (Sc),
x) Verschlüsseln einer ersten PIN-Eingabe am Kundengerät mit dem dritten Schlüssel des Kundengerätes (Sc) zu einem Chiffrat,
xi) Senden des Chi.ffrats und des Kundenzertifikats an die Zentrale,
xii) Entschlüsseln des Chiffrats in der Zentrale mit dem vierten Schlüssel des Kundengerätes (Pc), Entschlüsseln der ersten PIN-Eingabe und Überprüfen des zugesendeten Kundenzertifikats mit dem in der Zentrale gespeicherten Kundenzertifikat.

2. Verfahren nach Anspruch 1, **dadurch gekennzeichnet, daß** das Chiffrat in der Zentrale entschlüsselt und daß das vom Kundengerät übermittelte Zertifikat mit dem in der Zentrale gespeicherten Zertifikat verglichen wird, um die Authentizität der Daten zu verifizieren.

3. Verfahren nach einem der Ansprüche 1 oder 2, **dadurch gekennzeichnet, daß** die Übermittlung der Daten von der Zentrale an das Kundengerät und vom Kundengerät an die Zentral per Funk- und/oder per Leitungsverbindung erfolgt.

4. Verfahren nach einem der Ansprüche 1 bis 3, **dadurch gekennzeichnet, daß** die Verreihung der verreihten Ziffernanordnung bei der Initialisierung des Verfahrens einmalig vom Kunden gewählt und an die Zentrale übermittelt wird.

5. Verfahren nach einem der Ansprüche 1 bis 3, **dadurch gekennzeichnet, daß** die Verreihung der verreihten Ziffernanordnung in der Zentrale für jede Übermittlung an das Kundengerät neu generiert wird.

6. Verfahren nach einem der Ansprüche 1 bis 5, **gekennzeichnet durch** die weiteren Schritte
iii.a) Generieren eines Zeitstempels in der Zentrale,
iv.a) Übermitteln des verschlüsselten Schlüssels zusammen mit dem Zeitstempel an das Kundengerät,
x.a) Verschlüsseln der ersten PIN-Eingabe am Kundengerät zusammen mit dem Zeitschlüssel zu einem Chiffrat.

7. Verfahren nach einem der Ansprüche 1 bis 6, **gekennzeichnet durch** die weiteren Schritte:
x.b) Verschlüsseln einer zweiten PIN-Eingabe am Kundengerät mit dem dritten Schlüssel des Kundengerätes (Sc) zu einem Chiffrat, um eine neue PIN zur Zentrale zu schicken, und
x.c) Verschlüsseln einer dritten PIN-Eingabe am Kundengerät mit dem dritten Schlüssel des Kundengerätes (Sc) zu einem Chiffrat, um die neue PIN zu bestätigen.

8. Verfahren nach einem der Ansprüche 1 bis 6, **gekennzeichnet dadurch, daß** zusätzlich zur ersten PIN-Eingabe die Nummerneingabe einer Kreditkartennummer und/oder ein Ablaufdatum einer Kreditkarte und/oder eine Prüfziffer einer Kreditkarte erfolgt und zusammen mit der ersten PIN-Eingabe verschlüsselt an die Zentrale übermittelt wird.

9. Verfahren nach einem der Ansprüche 1 bis 6, **gekennzeichnet dadurch, daß** zusätzlich zur ersten PIN-Eingabe die Nummerneingabe einer warenspezifischen Zahl, wie z.B. die ISBN eines Buchtitels, erfolgt und zusammen mit der ersten PIN-Eingabe verschlüsselt an die Zentrale übermittelt wird.

## Claims

1. A method for securing data and safeguarding the data origin, wherein the data are transmitted electronically encrypted from a customer device to a center, the method including the following steps:
i) generating and storing in memory an RSA key pair, comprising a first key (Sa) and a second key (Pa), for signing customer certificates in the center;
ii) generating and storing in memory two RSA key pairs for the customer device, comprising a third key of the customer device (Sc) and a fourth key of the customer device (Pc) as well as a first key encryption key (St) and a second key encryption key (Pt), the first key encryption key (St) and the second key encryption key (Pt) being suitable for secure transportation of the third key of the customer device (Sc);
iii) generating an encrypted key by encrypting the third key of the customer device (Sc), using the second key encryption key (Pt), and generating a customer certificate in the center by encrypting the customer-specific telephone number and the IMEI of the customer device and/or a customer number, using the fourth key of the customer device (Pc), and ensuing encryption using the first key (Sa) for signing customer certificates;
iv) transmitting the encrypted key and the customer certificate to the customer device;
v) sending the first key encryption key (St) to the customer device in response to a request by the customer device;
vi) decrypting the encrypted key using the first key encryption key (St) in the customer device, whereupon the third key of the customer device (Sc) is obtained;
**characterised in that** it includes the steps:
vii) encrypting a randomized sequence of numbers in the center using the fourth key of the customer device (Pc);
viii) sending the encrypted randomized sequence of numbers to the customer device;
ix) decrypting the encrypted randomized sequence of numbers in the customer device, using the third key of the customer device (Sc);
x) encrypting a first PIN input at the customer device, using the third key of the customer device (Sc), to a ciphertext;
xi) sending the ciphertext and the customer certificate to the center;
xii) decrypting the ciphertext in the center, using the fourth key of the customer device (Pc), decrypting the first PIN input, and checking the customer certificate sent, using the customer certificate stored in memory in the center.

2. The method of claim 1, **characterized in that** the ciphertext is decrypted in the center, and that the certificate transmitted from the customer device is compared with the certificate stored in memory in the center, in order to verify the authenticity of the data.

3. The method of one of claims 1 or 2, **characterized in that** the transmission of the data from the center to the customer device and from the customer device to the center is done by radio and/or by wire.

4. The method of one of claims 1 through 3, **characterized in that** the randomization of the randomized sequence of numbers is selected a single time by the customer upon initialization of the method and forwarded to the center.

5. The method of one of claims 1 through 3, **characterized in that** the randomization of the randomized sequence of numbers is generated anew in the center for every transmission to the customer device.

6. The method of one of claims 1 through 5, **characterized by** the following further steps:
iii.a) generating a time stamp in the center;
iv.a) transmitting the encrypted key together with the time stamp to the customer device;
x.a) encrypting the first PIN input at the customer device together with the time key to a ciphertext.

7. The method of one of claims 1 through 6, **characterized by** the following further steps:
x.b) encrypting a second PIN input at the customer device, using the third key of the customer device (Sc) to a ciphertext, in order to send a new PIN to the center; and
x.c) encrypting a third PIN input at the customer device, using the third key of the customer device (Sc), to a ciphertext, in order to confirm the new PIN.

8. The method of one of claims 1 through 6, **characterized in that** in addition to the first PIN input, the number input for a credit card number and/or an expiration of a credit card and/or a security code of a credit card is done and transmitted, together with the first PIN input, in encrypted form to the center.

9. The method of one of claims 1 through 6, **characterized in that** in addition to the first PIN input, the number input of a product-specific number, such as the ISBN of a book title, is done and transmitted, together with the first PIN input, in encrypted form to the center.

## Revendications

1. Procédé de sécurisation de données et d'authentification de leur origine, les données étant transmises sous une forme électroniquement cryptée d'un appareil client à une centrale, et le procédé comprenant les étapes suivantes :
i) génération et enregistrement d'une paire de clés RSA constituée d'une première clé (Sa) et d'une deuxième clé (Pa) pour signer des certificats de clients dans la centrale,
ii) génération et enregistrement de deux paires de clés RSA pour l'appareil client, constitué d'une troisième clé de l'appareil client (Sc) et d'une quatrième clé de l'appareil client (Pc) ainsi que d'une première clé de cryptage de clé (St) et d'une deuxième clé de cryptage de clé (Pt), la première clé de cryptage de clé (St) et la deuxième clé de cryptage de clé (Pt) étant conçues pour le transport sécurisé de la troisième clé de l'appareil client (Sc),
iii) génération d'une clé cryptée par cryptage de la troisième clé de l'appareil client (Sc), avec la deuxième clé de cryptage de clé (Pt) ainsi que la génération d'un certificat client dans la centrale par cryptage du numéro de téléphone spécifique au client ainsi que de l'IMEI de l'appareil client et/ou d'un numéro de client avec la quatrième clé de l'appareil client (Pc) puis le cryptage avec la première clé (Sa) pour la signature de certificats clients,
iv) transmission de la clé cryptée et du certificat client à l'appareil client,
v) envoi de la première clé de cryptage de clé (St) à l'appareil client après une requête de l'appareil client,
vi) décryptage de la clé cryptée avec la première clé de cryptage de clé (St) dans l'appareil client, la troisième clé de l'appareil client (Sc) étant conservée,
**caractérisé par** les étapes supplémentaires :
vii) cryptage d'une disposition de chiffres en série dans la centrale avec la quatrième clé de l'appareil client (Pc),
viii) envoi de la disposition de chiffres en série cryptés à l'appareil client,
ix) décryptage de la disposition de chiffres en série cryptés dans l'appareil client avec la troisième clé de l'appareil client (Sc),
x) cryptage d'une première saisie de code PIN au niveau de l'appareil client avec la troisième clé de l'appareil client (Sc) en un texte crypté,
xi) envoi du texte crypté et du certificat client à la centrale,
xii) décryptage du texte crypté dans la centrale avec la quatrième clé de l'appareil client (Pc), décryptage du premier code PIN et vérification du certificat client envoyé avec le certificat client enregistré dans la centrale.

2. Procédé selon la revendication 1, **caractérisé en ce que** le texte crypté est décrypté dans la centrale et **en ce que** le certificat transmis par l'appareil client est comparé avec le certificat enregistré dans la centrale, afin de vérifier l'authenticité des données.

3. Procédé selon l'une des revendications 1 ou 2, **caractérisé en ce que** la transmission des données de la centrale à l'appareil client et de l'appareil client à la centrale a lieu par l'intermédiaire d'une liaison radio et/ou filaire.

4. Procédé selon l'une des revendications 1 à 3, **caractérisé en ce que** la succession de la disposition de chiffres en série est choisie par le client une fois lors de l'initialisation du procédé et transmise à la centrale.

5. Procédé selon l'une des revendications 1 à 3, **caractérisé en ce que** la succession de la disposition de chiffres en série dans la centrale est générée pour chaque transmission à l'appareil client.

6. Procédé selon l'une des revendications 1 à 5, **caractérisé par** les étapes supplémentaires :
iii.a) génération d'un horodatage dans la centrale,
iv.a) transmission de la clé cryptée avec l'horodatage à l'appareil client,
x.a) cryptage de la première saisie de code PIN dans l'appareil client avec la clé de temps en un texte crypté.

7. Procédé selon l'une des revendications 1 à 6, **caractérisé par** les étapes supplémentaires :
x.b) cryptage d'une deuxième saisie de code PIN dans l'appareil client avec la troisième clé de l'appareil client (Sc) en un texte crypté, afin d'envoyer un nouveau code PIN à la centrale, et
x.c) cryptage d'une troisième saisie de code PIN dans l'appareil client avec la troisième clé de l'appareil client (Sc) en un texte crypté, afin de confirmer le nouveau code PIN.

8. Procédé selon l'une des revendications 1 à 6, **caractérisé en ce que**, en plus de la première saisie de code PIN, la saisie d'un numéro de carte de crédit et/ou d'une date d'expiration d'une carte de crédit et/ou d'un numéro de contrôle d'une carte de crédit est effectuée et est transmise conjointement de manière cryptée avec la première saisie de code PIN à la centrale.

9. Procédé selon l'une des revendications 1 à 6, **caractérisé en ce que**, en plus de la première saisie de code PIN, la saisie d'un numéro spécifique à un article, comme l'ISBN d'un titre de livre, est effectuée et est transmise conjointement de manière cryptée avec la première saisie de code PIN à la centrale.
